# EUROPEAN PATENT SPECIFICATION

(11) **EP 3 912 213 B1**
(45) Date of publication and mention of the grant of the patent: **01.01.2025**
(21) Application number: 20701848.2
(22) Date of filing: 17.01.2020
(51) Int. Cl.: H01M 4/90, H01M 4/92, H01M 8/1004, H01M 8/1051, H01M 8/1053, H01M 8/1018, H01M 8/10

(54) **MEMBRANE**
MEMBRAN
MEMBRANE

(30) Priority: 17.01.2019 GB 201900646
(43) Date of publication of application: 24.11.2021
(73) Proprietor: Johnson Matthey Hydrogen Technologies Limited, London EC4A 4AB (GB)
(72) Inventor: MISTRY, Mayur, Sonning Common, Reading RG4 9NH (GB); O' MALLEY, Rachel, Sonning Common, Reading RG4 9NH (GB)
(74) Representative: Johnson Matthey Plc
(86) International application number: PCT/GB2020/050093
(87) International publication number: WO 2020/148545

(56) References cited:
- US-A1- 2012 172 461
- SADIA KABIR ET AL: "Nitrogen-Doped Three-Dimensional Graphene-Supported Palladium Nanocomposites: High-Performance Cathode Catalysts for Oxygen Reduction Reactions", ACS CATALYSIS, vol. 7, no. 10, 6 October 2017 (2017-10-06), US, pages 6609 - 6618, XP055670082, ISSN: 2155-5435, DOI: 10.1021/acscatal.7b02071
- SANLI LALE ISIKEL ET AL: "Development of graphene supported platinum nanoparticles for polymer electrolyte membrane fuel cells: Effect of support type and impregnation-reduction methods", INTERNATIONAL JOURNAL OF HYDROGEN ENERGY, ELSEVIER SCIENCE PUBLISHERS B.V., BARKING, GB, vol. 41, no. 5, 16 January 2016 (2016-01-16), pages 3414 - 3427, XP029416185, ISSN: 0360-3199, DOI: 10.1016/J.IJHYDENE.2015.12.166
- C. KLOSE ET AL: "Membrane Interlayer with Pt Recombination Particles for Reduction of the Anodic Hydrogen Content in PEM Water Electrolysis", JOURNAL OF THE ELECTROCHEMICAL SOCIETY, vol. 165, no. 16, 21 November 2018 (2018-11-21), pages F1271 - F1277, XP055669989, ISSN: 0013-4651, DOI: 10.1149/2.1241814jes

## Description

### Field of the Invention

The present invention relates to a catalyst coated membrane. More specifically, the present invention relates to a catalyst coated membrane comprising a proton exchange membrane comprising a recombination catalyst supported on graphene.

### Background of the Invention

A fuel cell is an electrochemical cell comprising two electrodes separated by an electrolyte. A fuel, e.g. hydrogen, an alcohol such as methanol or ethanol, or formic acid, is supplied to the anode and an oxidant, e.g. oxygen or air, is supplied to the cathode. Electrochemical reactions occur at the electrodes, and the chemical energy of the fuel and the oxidant is converted to electrical energy and heat. Electrocatalysts are used to promote the electrochemical oxidation of the fuel at the anode and the electrochemical reduction of oxygen at the cathode.

Fuel cells are usually classified according to the nature of the electrolyte employed. Often the electrolyte is a solid polymeric membrane, in which the membrane is electronically insulating but ionically conducting. In the proton exchange membrane fuel cell the membrane is proton conducting, and protons, produced at the anode, are transported across the membrane to the cathode, where they combine with oxygen to form water.

A principal component of the proton exchange membrane fuel cell is the membrane electrode assembly, which is essentially composed of five components. The central component is the proton exchange membrane. On either side of the ion-conducting membrane there is an electrocatalyst layer, containing an electrocatalyst material designed for the specific electrochemical reaction. Finally, adjacent to each electrocatalyst layer there is a gas diffusion layer. The gas diffusion layer must allow the reactants to reach the electrocatalyst layer and must conduct the electric current that is generated by the electrochemical reactions. Therefore, the gas diffusion layer must be porous and electrically conducting.

The electrocatalyst layers generally comprise an electrocatalyst material comprising a metal or metal alloy suitable for the fuel oxidation or oxygen reduction reaction, depending on whether the layer is to be used at the anode or cathode. The electrocatalyst is typically based on platinum or platinum alloyed with one or more other metals. The platinum or platinum alloy catalyst can be in the form of unsupported nanoparticles (such as metal blacks or other unsupported particulate metal powders) but more conventionally the platinum or platinum alloy is deposited as higher surface area nanoparticles onto a high surface area conductive carbon material, such as a carbon black or heat-treated versions thereof.

The electrocatalyst layers also generally comprise a proton conducting material, such as a proton conducting polymer, to aid transfer of protons from the anode catalyst to the membrane and/or from the membrane to the cathode catalyst.

Conventionally, the membrane electrode assembly can be constructed by a number of methods outlined hereinafter:
(i) The electrocatalyst layer may be applied to the gas diffusion layer to form a gas diffusion electrode. A gas diffusion electrode is placed on each side of an ion-conducting membrane and laminated together to form the five-layer membrane electrode assembly;
(ii) The electrocatalyst layer may be applied to both faces of the ion-conducting membrane to form a catalyst coated ion-conducting membrane. Subsequently, a gas diffusion layer is applied to each face of the catalyst coated ion-conducting membrane;
(iii) A membrane electrode assembly can be formed from an ion-conducting membrane coated on one side with an electrocatalyst layer, a gas diffusion layer adjacent to that electrocatalyst layer, and a gas diffusion electrode on the other side of the ion-conducting membrane.

Typically, tens or hundreds of membrane electrode assemblies are required to provide enough power for most applications, so multiple membrane electrode assemblies are assembled to make up a fuel cell stack. Flow field plates are used to separate the membrane electrode assemblies. The plates perform several functions: supplying the reactants to the membrane electrode assemblies; removing products; providing electrical connections; and providing physical support.

During use of a proton exchange membrane in a fuel cell, crossover can occur. Crossover is the migration of atoms, molecules, ions, or chemical species through the membrane. For example, un-reacted hydrogen can migrate from the anode side of the fuel cell, through the membrane, to the cathode side. Also, oxygen can migrate from the cathode side of the fuel cell, through the membrane, to the anode side. Gas crossover such as this has detrimental effects on the performance and lifetime of the fuel cell.

The theoretical maximum voltage of a hydrogen-fuelled proton exchange membrane fuel cell is represented by the open current voltage (OCV) of 1.23V at 298 K. However, under practical conditions this theoretical voltage may not be reached. In low temperature cells such as the proton exchange membrane fuel cell, the drop in voltage can be significant. Crossover of hydrogen to the cathode may contribute to this drop in voltage because it reacts chemically with oxygen at the cathode, thus producing no current.

Regarding lifetime of the fuel cell, hydrogen peroxide can be generated by the reaction of crossed-over gases on the catalysed or un-catalysed carbon surfaces of the fuel cell electrodes. In turn, the hydrogen peroxide can decompose within the membrane to form species such as hydroperoxyl and hydroxyl radicals. These oxidising radicals attack the ionomeric component of the membrane leading to chain scission, unzipping and loss of functional groups. Oxygen and hydrogen gas crossover are the most fundamental reasons for membrane chemical degradation. This chemical degradation, which may or may not be combined with mechanical and thermal degradation, leads to membrane thinning and pinhole formation which in turn further accelerates gas crossover. The impact of such degradation can range from a loss of conductivity and subsequent performance loss (in the case of modest chemical degradation) to individual cell and ultimately, stack, failure.

Crossover of reactant gas to the opposite electrode can further reduce cell performance by de-polarising that electrode by parasitic reactions. Also, the crossover of reactant gases leads to a direct loss of fuel cell electrical efficiency because although the reactant is consumed, the electrical work is not captured.

Therefore, it is an important function of the membrane to inhibit the crossover of hydrogen and oxygen gas, and the contact of hydrogen and oxygen with the cathode or anode, respectively. Various approaches have been used to prevent hydrogen crossing the membrane to the cathode. WO2014/009721 proposes using a barrier layer comprising graphene-based platelets in the membrane to prevent the cross-over of reactants. The barrier layer is required to comprise at least 80% and up to 100% graphene-based platelets. US2007/0072036 discloses a membrane incorporating a platinum catalyst.

S. Kabir et al., ACS Catal., 2017, 7, 6609-6618 discloses nitrogen-doped three-dimensional graphene-supported palladium nanocomposites: high performance cathode catalysts for oxygen reduction reactions.

L. I. Sanli et al., International Journal of Hydrogen energy, 2016, 41, 3414-3427 discloses development of graphene supported platinum nanoparticles for polymer electrolyte membrane fuel cells: effect of support type and impregnation-reduction methods.

There remains a need for proton exchange membranes which are resistant to gas crossover and subsequent degradation.

### Summary of the Invention

Accordingly, the present invention provides a catalyst coated membrane comprising a proton exchange membrane and an electrocatalyst layer applied to at least one face of the proton exchange membrane, wherein the proton exchange membrane comprises an ion-conducting layer which comprises an ion-conducting polymer and a supported recombination catalyst, wherein the recombination catalyst is supported on graphene, and the supported recombination catalyst has a D₅₀ particle size in the range of and including 0.1 to 20 µm as measured by dynamic light scattering.

It is a surprising advantage of the present invention that the membrane maintains a high voltage over time under low humidity conditions, as well as high humidity conditions, which is attributable to low levels of damage resulting from gas crossover. The proton exchange membrane of the invention also demonstrates a surprising increase in tensile strength.

Also provided is a membrane electrode assembly comprising the catalyst coated membrane of the invention.

Also provided is a fuel cell comprising the catalyst coated membrane of the invention, or the membrane electrode assembly of the invention.

Also provided is a proton exchange membrane electrolyser comprising the catalyst coated membrane of the invention. A skilled person will understand that preventing gas crossover in the membrane of such an electrolyser is also beneficial and so the benefits of the membrane of the invention extend to proton exchange membrane electrolysers.

### Brief Description of the Drawings

Figure 1 provides an example arrangement of membrane layers in a proton exchange membrane.
Figure 2 provides a graph showing membrane toughness up to 10% strain for membranes of Example 1 and Comparative Examples 1-3.
Figure 3 provides a graph showing OCVs for membranes of Example 1 and Comparative Examples 1-3 at 100% and 30% relative humidity.
Figure 4 provides a graph showing the OCV of membranes over time for Example 1 and Comparative Examples 1-3.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

A recombination catalyst is a catalyst which catalyses the reaction between hydrogen gas and oxygen gas to form water. Accordingly, the recombination catalyst used in the proton exchange membrane of the present invention may be any catalyst capable of catalysing the reaction between hydrogen gas and oxygen gas to form water, thus reducing or preventing the crossover of either hydrogen or oxygen, or both, through the membrane.

The supported recombination catalyst may be prepared according to the general method described in WO2013/045894A1, which is applicable to the present deposition of catalyst on graphene as well as the deposition of catalyst on carbon black described in WO2013/045894A1. A skilled person will be aware of other methods which can be applied to the provision of a recombination catalyst supported on a graphene.

Suitably, the recombination catalyst is selected from the list comprising:
i) the platinum group metals (i.e. the group of elements comprising platinum, palladium, iridium, rhodium, ruthenium, and osmium);
ii) gold;
iii) base metals;
iv) an alloy comprising one or more of the above described elements;
v) mixtures of any of the above.

Suitably, the recombination catalyst is platinum. Alternatively, the recombination catalyst may be platinum alloyed with one or more of the above described elements, for example a platinum-palladium alloy, or a platinum-iridium alloy. Alternatively, the recombination catalyst may comprise iron, nickel, cobalt or chromium, preferably nickel, or an alloy of platinum with one or more of these metals.

The recombination catalyst may be provided as finely dispersed particles on the graphene support. Accordingly, the particles of the recombination catalyst on the support may have a D₅₀ particle size of no more than 50 nm, no more than 30 nm, no more than 20 nm, no more than 10 nm, or no more than 5 nm. For example, the particles have a D₅₀ particle size of at least 1 nm. D₅₀ particle size is measured by examination in a Transmission Electron Microscope (TEM).

The recombination catalyst may be present in an amount of at least 10 wt%, suitably at least 20 wt%, preferably at least 30 wt%, typically at least 40 wt% of the total weight of the recombination catalyst and the support. The recombination catalyst may be present in an amount of no more than 90 wt%, suitably no more than 80 wt%, preferably no more than 70 wt%, typically no more than 60 wt% of the total weight of the recombination catalyst and the support. Accordingly, the recombination catalyst may be present in an amount in the range of and including 10 to 90 wt%, suitably 20 to 80 wt%, preferably 30 to 70 wt%, typically 40 to 60 wt% of the total weight of the recombination catalyst and the support. For avoidance of doubt, wt% in this context is ([weight recombination catalyst]/[ weight of recombination catalyst + support]) x 100.

The atomic percentage of platinum in alloy recombination catalysts is not particularly limited and a skilled person can determine preferred ratios. For example, when the recombination catalyst is an alloy of platinum with a platinum group metal, platinum may be present in the alloy in an amount of at least 30 atom%, suitably at least 40 atom%, preferably at least 45 atom%. For example, platinum may be present in the alloy in an amount of no more than 80 atom%, suitably no more than 70 atom%, preferably no more than 60 atom%. Accordingly, platinum may be present in the alloy in the range of and including 30 to 80 atom%, suitably 40 to 70 atom%, preferably 45 to 60 atom% e.g. about 50 atom%. Alternatively, when the recombination catalyst is an alloy of platinum with a base metal, the base metal is typically present in an amount of no more than 20 atom%, suitably no more than 10 atom%.

The supported recombination catalyst has a D₅₀ particle size in the range of and including 0.1 to 20 µm. The supported recombination catalyst (i.e. particles of support comprising catalyst) may have a D₅₀ particle size of at least 0.3 µm, preferably at least 0.5 µm, typically at least 0.75 µm. The supported recombination catalyst may have a D₅₀ particle size of no more than 10 µm, preferably no more than 5 µm, typically no more than 3 µm. The supported recombination catalyst may have a D₅₀ particle size in the range of and including 0.3 to 10 µm, preferably 0.5 to 5 µm, typically 0.75 to 3 µm.
For example, the supported recombination catalyst may have a D₅₀ particle size of about 1 µm. D₅₀ particle size is measured by dynamic light scattering using a Malvern Mastersizer (RTM).

The recombination catalyst is supported on graphene. Accordingly, the term "supported recombination catalyst" used herein means a recombination catalyst supported on graphene. The term "supported" will be readily understood by a skilled person. For example, it will be understood that the term "supported" includes the recombination catalyst being bound or fixed to graphene by physical or chemical bonds. For instance, the recombination catalyst may be bound or fixed to graphene by way of ionic or covalent bonds, or non-specific interactions such as van der Waals forces.

A skilled person will understand the term graphene to refer to materials comprising the allotrope of carbon consisting of a single layer of carbon atoms arranged in a hexagonal lattice i.e. a single carbon layer of the graphite structure as defined by IUPAC. In addition to single layer graphene, the term graphene includes graphene-based materials such as few-layer graphene (e.g. 2-10 layers) and ultrafine/thin graphite (e.g. more than about 10 graphene sheets but nanometre thickness, e.g. below 100 nm) which include graphene nanoplatelets, nanosheets, nanoflakes, microsheets etc. Regardless of terminology, both single and multiple planar layers of carbon atoms are intended here. Graphene which includes functional groups (such as oxygen (oxide), sulfonic (sulfonated), sulphur (sulphide) etc) on the external surfaces are also intended here. A proposed nomenclature for graphene and graphene-based materials can be found in in Carbon, 65 (2013), 1-6 which is hereby incorporated by reference in its entirety.

Accordingly, the support of the present invention may be any material characterised as a graphene material. The graphene may be present as graphene-based platelets (e.g. nanoplatelets), nanosheets, nanoflakes, microsheets and other available forms. The graphene-based platelets have a wafer-like shape with an x:y aspect ratio from 0.1 to 10, a x:z aspect ratio of at least 10 and a y:z aspect ratio of at least 10. By the term 'graphene-based platelets' we mean platelets with a structure made up of a single or multiple graphene layer(s). Suitably, the support may be graphene-based platelets, otherwise known as ultrathin graphite. An example of graphene-based platelets are xGnP^{®} nanoplatelets available from XG Sciences, which includes xGnP^{®} nanoplatelets Grade C.

The graphene may have a surface area of at least 200 m²/g, suitably at least 300 m²/g, preferably at least 400 m²/g, typically at least 500 m²/g as measured by the BET method according to ISO 9277:2010. The graphene may have a surface area of no more than 1300 m²/g, suitably no more than 1200 m²/g, preferably no more than 1100 m²/g, typically no more than 1000 m²/g as measured by the BET method. Accordingly, the graphene may have a surface area in the range of and including 200 to 1300 m²/g, suitably 300 to 1200 m²/g, preferably 400 to 1100 m²/gm, typically 500 to 1000 m²/g as measured by the BET method.

The proton exchange membrane of the present invention consists of one or more ion-conducting layers. The layer(s) of the proton exchange membrane of the present invention comprise(s) an ion-conducting polymer, which is a proton conducting ionomer. An ionomer will be understood to include polymeric materials which comprise functional groups capable of being ionised and forming ionic bonds.

Suitably, the ion-conducting material of the membrane of the present invention includes ionomers such as perfluorosulphonic acid (e.g. Nation^{®} (Chemours Company), Aciplex^{®} (Asahi Kasei), Aquivion^{®} (Solvay Specialty Polymer), Flemion^{®} (Asahi Glass Co.), or ionomers based on partially fluorinated or non-fluorinated hydrocarbon sulphonated or phosphonated polymers, such as those available from FuMA-Tech GmbH as the fumapem^{®} P, E or K series of products, JSR Corporation, Toyobo Corporation, and others. Suitably, the ionomer is a perfluorosulphonic acid, in particular the Aquivion^{®} range available from Solvay, especially Aquivion^{®} 790EW.

In the layer(s) comprising a supported recombination catalyst, the supported recombination catalyst is suitably dispersed, preferably uniformly dispersed, throughout the ion-conducting polymer. Accordingly, a layer which comprises the supported recombination catalyst of the invention may be defined as a layer in which supported recombination catalyst is uniformly dispersed throughout. The proton exchange membrane may also comprise layers which do not comprise the supported recombination catalyst of the invention. Suitably, the boundary between a layer which comprises uniformly dispersed recombination catalyst and a layer which does not comprise supported recombination catalyst is defined by where the uniform dispersion of recombination catalyst terminates.

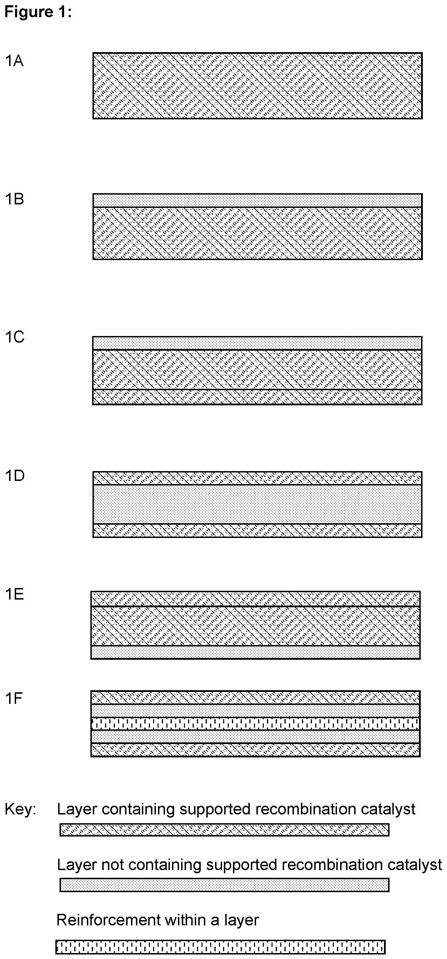

By way of illustration, the membrane may be formed of two or more, three or more, four or more, or five or more layers. Suitably, the membrane has no more than ten layers, preferably no more than eight layers, typically no more than six layers. For example, the membrane may comprise five layers. The layers may have the same composition as one another or be different to one another, providing that at least one layer comprises the supported recombination catalyst. Membrane **1A** in Figure 1 is a membrane comprising a single layer which comprises the supported recombination catalyst of the invention. Membranes **1B** to **1F** in Figure 1 comprise layers which do not comprise the supported recombination catalyst of the invention.

Layers may be arranged in any order. An example is provided in Figure 1. Suitably, a membrane according to the invention may comprise three layers comprising two layers which comprise a supported recombination catalyst of the invention (represented by **C**) and one layer which does not (represented by **U**). The layers may be arranged in any of three ways depending on the desired properties of the final membrane, e.g. **CCU** or **CUC** (Figure 1, **1C-1E**). The membrane can comprise four, five or six layers. Suitably, the membrane comprises five layers comprising two **C** layers and three **U** layers. Examples that the five layers may be arranged in are **UCCCU, UUCCC, CUCUC, UCCUC, UCUCC, CCUUC.**

It is beneficial to have a layer which comprises the supported recombination catalyst of the invention adjacent to or close to the cathode. For example, the layers of the membrane may be arranged in the order **UUC, UCC, CCC, UUUC, UUCC, UCCC, UUUUC, UUUCC, UUUCU, UCCCC** etc, wherein the right-hand side of the arrangement is the cathode side of the membrane. A **C** layer adjacent to or close to the cathode is particularly advantageous as the flux of hydrogen through the membrane is higher than the flux of oxygen through the membrane layer meaning recombination occurs to a higher extent on the side of the membrane closest to the cathode.

The thickness of the membrane of the present disclosure is not particularly limited and will depend on the intended application of the membrane. For example, typical fuel cell membranes have a thickness of at least 5 µm, suitably at least 8 µm, preferably at least 10 µm. Typical fuel cell membranes have a thickness of no more than 50 µm, suitably no more than 30 µm, preferably no more than 20 µm. Accordingly, typical fuel cell membranes have a thickness in the range of and including 5 to 50 µm, suitably 8 to 30 µm, preferably 10 to 20 µm.

The maximum thickness of each layer of the membrane is not particularly limited and the thickness of each layer will depend on the overall thickness of the membrane and the number of layers in the membrane. As an example, each layer of the membrane can have a thickness of at least 1 µm, suitably at least 2 µm, preferably at least 3 µm. Typical layers have a thickness of no more than 7 µm, suitably no more than 6 µm, preferably no more than 5 µm. For example, each layer can have a thickness in the range of and including 1 to 7 µm, suitably 2 to 6 µm, preferably 3 to 5 µm. It will be understood that each layer of the membrane does not necessarily need to be the same thickness as any of the other layers and each layer may have the same or different thickness as other layers of the membrane.

The proton exchange membrane may comprise at least 0.01 wt%, suitably at least 0.05 wt%, preferably at least 0.1 wt% of the supported recombination catalyst of the invention relative to the total weight of the proton exchange membrane. The proton exchange membrane may comprise no more than 10 wt %, suitably no more than 5 wt%, preferably no more than 3 wt% of the supported recombination catalyst of the invention relative to the total weight of the proton exchange membrane. Accordingly, the proton exchange membrane may comprise an amount in the range of and including 0.01 to 10 wt%, suitably 0.05 to 5 wt%, preferably 0.1 to 5 wt%, more preferably 0.1 to 3 wt% of the supported recombination catalyst of the invention. For avoidance of doubt, wt% in this context means ([weight recombination catalyst + support]/[weight recombination catalyst + support] + [weight of the entire proton exchange membrane]) x 100. The amount of supported recombination catalyst in each layer is not particularly limited, and will depend on the overall amount in the membrane as well as the number of layers in the membrane.

The layers of the membrane of the disclosure may comprise additional components such as peroxide decomposition catalysts and/or radical decomposition catalysts such as ceria. Layers may also comprise a reinforcement material, such as a planar porous material (for example expanded polytetrafluoroethylene (ePTFE) as described in USRE37307), embedded within the thickness of the membrane, to provide for improved mechanical strength of the membrane, such as increased tear resistance and reduced dimensional change on hydration and dehydration, and thus further increase the durability of a membrane electrode assembly and lifetime of a fuel cell incorporating the membrane of the invention (see for example Figure 1, **1F**). Other approaches for forming reinforced membranes include those disclosed in US 7,807,063 and US 7,867,669 in which the reinforcement is a rigid polymer film, such as polyimide, into which a number of pores are formed and then subsequently filled with the PFSA ionomer. Graphene particles dispersed in an ion-conducting polymer layer (without a recombination catalyst) may also be used as a reinforcement material.

Any reinforcement present may extend across the entire thickness of the membrane or may extend across only a part of the thickness of the membrane. It will be understood that the thickness of the membrane extends perpendicular to the face of the membrane, e.g. it is in the through plane z-direction. It may further be advantageous to reinforce outer parts of the first and second surface of the membrane to a greater extent than the central face of the first and second surface of the membrane. Conversely, it may be desirable to reinforce the centre of the first or second surface of the membrane to a greater extent than outer edges of the first or second surface of the membrane.

For example, the membrane may comprise two layers which do not contain the recombination catalyst of the invention, and three layers which do, wherein the central (i.e. the third) layer comprises a supported recombination catalyst of the invention and a reinforcement material. The layers are arranged in the order **CUC^{R}UC,** wherein **C^{R}** represents a reinforcement of the layer, see Figure **1F**.

The membrane is prepared using conventional methods known to those skilled in the art, for example using a casting method. The membrane may be fabricated by providing (e.g. casting) a dispersion of the supported recombination catalyst and ion-conducting polymer, or a dispersion of the ion-conducting polymer, onto a removable support (e.g. a polymer backing film) to form a layer. After provision of a layer it is left to dry at room temperature before subsequent layers are provided. For example, the dispersion layer(s) may be left to dry for a period of at least 20 minutes at room temperature. Any second and subsequent layers are provided (e.g. cast) onto the previously provided dried layer.

Following provision of the layer(s) of dispersion, the resulting composite of layers may be further dried, for example by heating in an oven at a temperature in excess of 100 °C for a period of time of at least 5 minutes, suitably no more than 20 minutes. The dried layer or composite of layers is then annealed to provide the membrane of the disclosure. For example, the annealing may comprise heating in an oven at a temperature of at least 175 °C, typically no more than 250°C for a period of time of at least 10 minutes, typically no more than 30 minutes.

The ion-conducting polymers typically used in the invention, such as perfluorosulphonic acid ionomers like Aquivion^{®} 790EW are typically provided as a solid dispersion, which may be in water. For instance, the dispersion may comprise at least 20 wt%, suitably no more than 30 wt%, preferably 25 wt% polymer solid. It may be beneficial to add an organic solvent, such as propanol, to the as received polymer dispersion. For example, an organic solvent may be added such that it makes at least 20 wt%, suitably at least 30 wt%, preferably no more than 50 wt% of the thus formed polymer dispersion.

To prepare a dispersion of ion-conducting polymer for provision of a layer which comprises the supported recombination catalyst of the invention, the supported recombination catalyst may be dispersed in a suitable solvent, for example water or a mixture of water and propanol. The supported recombination catalyst may be present in an amount of at least 0.1 wt%, suitably at least 1.0 wt%, preferably at least 2 wt%, typically no more than 5 wt% of the total weight of the supported recombination catalyst and solvent. Optionally, the dispersion comprising the supported recombination catalyst may be subject to a process to control the particle size distribution of the supported recombination catalyst. For example, the dispersion comprising the supported recombination catalyst may be passed through a microfluidizer. The dispersion of the supported recombination catalyst in a solvent is then mixed with the ion-conducting polymer dispersion. Other materials described above that might be present in the layers may be added. To add a reinforcement component such as ePTFE, the dispersion is laid onto the reinforcement component. Put another way, the reinforcement component may be simultaneously laid into a layer during casting of the membrane.

Accordingly, a membrane according to the present disclosure may be provided by a process comprising the steps of providing a first dispersion layer comprising a supported recombination catalyst of the invention and an ionomer solid, drying the layer, and annealing the dried layer. Alternatively, a membrane according to present disclosure may be provided by a process comprising the steps of providing a first dispersion layer comprising a supported recombination catalyst of the invention and ionomer solid, drying the dispersion layer, providing a second dispersion layer onto the dried first dispersion layer, drying the first and second dispersion layers, and optionally providing a third, fourth and fifth dispersion layer successively onto the previously dried composite of layers prior to annealing the dried composite of layers.

Also provided is a catalyst coated membrane comprising a proton exchange membrane according to the disclosure and an electrocatalyst layer applied to one or both faces of the membrane. The electrocatalyst layer comprises one or more electrocatalysts. The one or more electrocatalysts are independently a finely divided unsupported metal powder, or a supported electrocatalyst wherein small particles (e.g. nanoparticles) are dispersed on electrically conducting particulate carbon supports. The electrocatalyst metal is suitably selected from:
(i) the platinum group metals (platinum, palladium, rhodium, ruthenium, iridium and osmium);
(ii) gold or silver;
(iii) a base metal;
or an alloy or mixture comprising one or more of these metals or their oxides.

The exact electrocatalyst used will depend on the reaction it is intended to catalyse and its selection is within the capability of the skilled person. The preferred electrocatalyst metal is platinum, which may be alloyed with other precious metals or base metals. The term "precious metals" as used herein will be understood to include the metals platinum, palladium, rhodium, ruthenium, iridium, osmium, gold and silver.

If the electrocatalyst is a supported catalyst, the loading of metal particles on the carbon support material may be in the range of and including 10-90 wt%, suitably 15-75wt% of the weight of resulting electrocatalyst.

The electrocatalyst layer is suitably applied to a first and/or second face of the membrane as an ink, either organic or aqueous or a mixture of organic and aqueous (but preferably aqueous). The ink may suitably comprise other components, such as ion-conducting polymer as described in EP0731520, which are included to improve the ionic conductivity within the layer. Alternatively, the electrocatalyst layer can be applied by the decal transfer of a previously prepared electrocatalyst layer.

The electrocatalyst layer may also comprise additional components. Such components include, but are not limited to: a proton conductor (e.g. a polymeric or aqueous electrolyte, such as a perfluorosulphonic acid (PFSA) polymer (e.g. Nation^{®}), a hydrocarbon proton conducting polymer (e.g. sulphonated polyarylenes) or phosphoric acid); a hydrophobic (a polymer such as PTFE or an inorganic solid with or without surface treatment) or a hydrophilic (a polymer or an inorganic solid, such as an oxide) additive to control water transport. In addition, the electrocatalyst layer may also comprise a further catalytic material, which may or may not have the same function as the electrocatalyst material of the invention. For example, where the electrocatalyst material of the invention is employed as an oxygen reduction catalyst, the additional catalytic material may be added to mitigate the degradation caused by repeated start-up/shut-down cycles by catalysing the oxygen evolution reaction (and, for example, comprise a ruthenium and/or iridium-based metal oxide). In a further example, the additional catalyst may promote the decomposition of hydrogen peroxide (and for example comprise ceria or manganese dioxide).

Also provided is a membrane electrode assembly comprising the membrane of the disclosure or the catalyst coated membrane of the invention.

The membrane electrode assembly may comprise:
(i) a proton exchange membrane of the disclosure may be sandwiched between two gas diffusion electrodes (one anode and one cathode);
(ii) a catalyst coated membrane according to the invention having an electrocatalyst layer on one side may be sandwiched between a gas diffusion layer and a gas diffusion electrode, the gas diffusion layer contacting the side of the membrane having the electrocatalyst layer thereon, or;
(iii) an catalyst coated membrane of the invention having an electrocatalyst layer on both sides may be sandwiched between two gas diffusion layers.

The gas diffusion layers are suitably based on conventional gas diffusion substrates. Typical substrates include non-woven papers or webs comprising a network of carbon fibres and a thermoset resin binder (e.g. the TGP-H series of carbon fibre paper available from Toray Industries Inc., Japan or the H2315 series available from Freudenberg FCCT KG, Germany, or the Sigracet^{®} series available from SGL Technologies GmbH, Germany or AvCarb^{®} series from AvCarb Material Solutions, or woven carbon cloths. The carbon paper, web or cloth may be provided with a further treatment prior to being incorporated into a MEA either to make it more wettable (hydrophilic) or more wet-proofed (hydrophobic). The nature of any treatments will depend on the type of fuel cell and the operating conditions that will be used. The substrates can be made more wettable by incorporation of materials such as amorphous carbon blacks via impregnation from liquid suspensions, or can be made more hydrophobic by impregnating the pore structure of the substrate with a colloidal suspension of a polymer such as PTFE or polyfluoroethylenepropylene (FEP), followed by drying and heating above the melting or flow point of the polymer. For applications such as the PEMFC, a microporous layer is typically applied to the gas diffusion substrate on the face that will contact the electrocatalyst layer. The microporous layer typically comprises a mixture of a carbon black and a polymer such as polytetrafluoroethylene (PTFE).

The membrane electrode assembly may further comprise components that seal and/or reinforce the edge regions of the membrane electrode assembly for example as described in WO2005/020356. The membrane electrode assembly is assembled by conventional methods known to those skilled in the art.

Also provided is a fuel cell comprising the membrane of the disclosure, the catalyst coated membrane of the invention, or the membrane electrode assembly of the invention. The fuel cell is suitably a proton exchange membrane fuel cell.

In addition to being used in proton exchange membrane fuel cells, the proton exchange membrane of the disclosure may find use in any electrochemical device requiring such an ion-conducting polymer membrane, for example an electrolyser. A skilled person will be aware that the anode and cathode catalyst layers will be modified with respect to a fuel cell to take into account the different reactions taking place at these electrodes in an electrolyser compared to those electrodes in a fuel cell. Resistance to gas crossover is beneficial for an electrolyser because excessive crossover of hydrogen results in a combination of molecular hydrogen and molecule oxygen which is a potentially explosive mixture presenting a significant safety hazard, due to the wide explosive range of 5 - 95% hydrogen in oxygen. Use of the membrane of the disclsoure in an electrolyser may limit gas crossover without having to thicken the membrane. Thickening the membrane is a conventional way to reduce gas crossover, but thickening the membrane also increases ionic resistance which has a negative impact on performance.

Typical membranes for proton exchange membrane electrolysers have a thickness of at least 50 µm, suitably at least 110 µm, preferably at least 120 µm. Typical thicknesses are no more than 200 µm, suitably no more than 180 µm, preferably no more than 150 µm. Accordingly, typical electrolyser membranes have a thickness in the range of and including 50 to 200 µm, suitably 110 to 180 µm, preferably 120 to 150 µm.

### Examples

### Preparation of Pt on graphene

Pt on graphene was prepared by applying the method described in WO2013/045894A1 for Pt on carbon black, using XGnP^{®} Graphene Nanoplatelets C-Grade GNP-C-500 (XG Sciences) as the graphene source and K₂[PtCl₄] as the platinum source.

### Example 1 - Membrane according to the present disclosure

Propan-1-ol (90.3 g) and 50% Pt/graphene (0.524 g) were combined and stirred for 1 hour and then passed through a microfluidiser to reduce the particle size of the additive. The resulting mixture was then added to an as received Aquivion^{®} 790EW (Solvay Specialty Polymer) (209.7 g, 25 wt% ionomer solid in water) ionomer dispersion and stirred overnight using a magnetic flee.

A membrane with a nominal thickness of 17 µm was generated using a 5-pass coating process onto a supporting polymeric film. The dispersion layer comprising the recombination catalyst and ionomer solid was used to provide layers 2, 3 and 4 whilst the ionomer only dispersion was used to provide layers 1 and 5. A commercially acquired ePTFE film was simultaneously laid into the third layer as this pass was being coated to form a membrane with arrangement **UCC^{R}CU**.

Each dispersion layer was left to dry at room temperature for 20 mins before addition of the subsequent dispersion layer. The final 5-pass composite dispersion layers were oven dried at 120 °C for 10 minutes, before oven annealed at 200 °C for 15 minutes. The final membrane was removed from the polymeric supporting backing film prior to use.

### Comparative Example 1

Comparative Example 1 was prepared in the same way as Example 1 except that instead of the catalyst being 50% Pt/graphene, the catalyst was 40% Pt on XC72R (a carbon black available from Vulcan^{®}) i.e. the support was a carbon black as opposed to graphene.

### Comparative Example 2

Comparative Example 2 was prepared in the same way as Example 1 except that the 50% Pt/graphene was substituted for graphene with no Pt, i.e. there was no recombination catalyst.

### Comparative Example 3

Comparative Example 3 was prepared in the same way as Example 1 except that none of the layers contained a supported recombination catalyst (i.e. all of the layers consisted of ionomer).

### Membrane testing

### Tensile testing

Mechanical testing of the membranes was conducted using a Hounsfield Tensometer. Force was applied to membrane strips of 15 mm x 100 mm using an automatic jaw rate of 50 mm/min under ambient laboratory conditions (i.e. nominally 20 °C, 50% RH).

The tensile properties of the differing membranes in the machine (MD) and transverse (TD) directions were compared by analysing the membrane toughness up to 10% strain - that is, the area under the stress-strain curve from 0 to 10% strain.

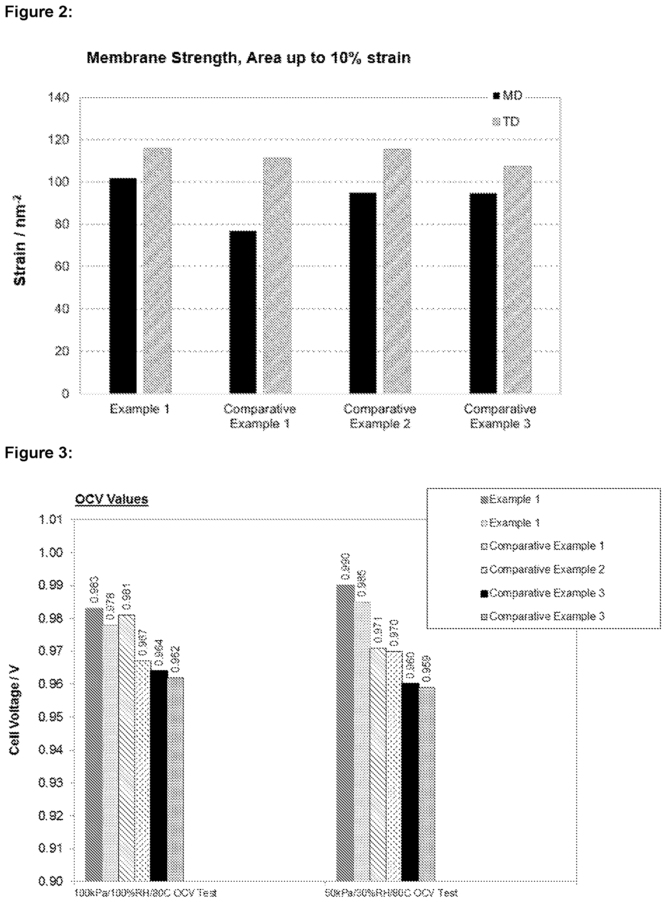

Figure 2 shows that membranes according to the present disclosure have superior toughness (i.e. greater tensile strength) in both the machine and transverse directions relative to Comparative Examples 1-3. Comparative Example 2, wherein the membrane comprises graphene but not a catalyst component, displayed similar membrane toughness in the transverse direction, but inferior toughness in the machine direction. Membrane toughness is substantially higher in the machine direction for the membrane of the disclosure as compared to when a recombination catalyst is provided on a non-graphene carbon support (Comparative Example 1), graphene without a recombination catalyst is used (Comparative Example 2), or no supported recombination catalyst or carbon is present at all (Comparative Example 3). Accordingly, the membrane of the disclosure is surprisingly tougher in the machine direction than a membrane containing graphene with no recombination catalyst, and as such has greater tensile strength.

### Electrochemical testing

Pre-formed electrodes were transferred to the membranes using decal methods, resulting in catalyst-coated membranes (CCMs) with 0.1 mg/cm² 60 wt% Pt/C anode layer (60% Pt on a high surface area carbon with 80% Solvay 790EW ionomer) and 0.4 mg/cm² 50 wt% Pt/C cathode (50% Pt on carbon, with 80% Aciplex 800EW ionomer) layer. Window-frame style gaskets were added creating CCMs with active areas of 217 cm². The CCMs were combined with Sigracet^{®} 10BB gas diffusion layers from SGL^{®} for testing, bonded to the CCM only by the compression afforded by the build of the test fixture.

Membrane electrode assemblies were conditioned by first adopting a 2 hour, 500 mA/cm² hold, 100% RH anode/cathode, ambient pressure, 1.5/2.0 stoich. anode/cathode followed by 17 cathode starvation steps. The performance of the membrane electrode assemblies was assessed using a series of three temperature and humidity test conditions (i) 80 °C, 30% RH, 50 kPa guage, H₂/air 1.5/2.0 stoich., (ii) 80 °C, 100% RH anode/cathode, 100 kPa guage, H₂/air 1.5/2.0 stoich., and (iii) an extended, 1 hour, hold at the open circuit voltage (OCV), 65 °C, 50% RH anode/cathode, ambient, H₂/air 1.5/2.0 stoich.

Figure 3 shows the superior open circuit voltage (OCV) of membrane electrode assemblies comprising a membrane of the present invention versus those of comparative examples 1-3 under test conditions (i) and (ii) described above (repeat entries for an example represent repeat tests). It is clear that under both high humidity and, in particular, low humidity conditions membrane electrode assemblies comprising a membrane of the present invention show superior OCV values.

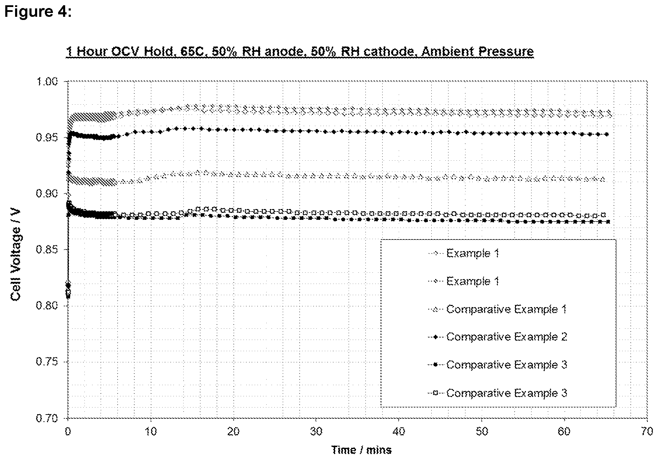

Membranes of the present invention have been shown not only to have a higher OCV. Additionally, the high OCV does not decrease on prolonged usage (see Figure 4, conducted under test conditions (iii) described above, repeat entries for an example represent repeat tests).

## Claims

1. A catalyst coated membrane comprising a proton exchange membrane and an electrocatalyst layer applied to at least one face of the proton exchange membrane, wherein the proton exchange membrane comprises an ion-conducting layer which comprises an ion-conducting polymer and a supported recombination catalyst, wherein the recombination catalyst is supported on graphene, and the supported recombination catalyst has a D₅₀ particle size in the range of and including 0.1 to 20 µm as measured by dynamic light scattering.

2. A catalyst coated membrane according to claim 1, wherein the supported recombination catalyst is dispersed in the ion-conducting polymer.

3. A catalyst coated membrane according to claim 1 or 2, wherein the recombination catalyst is platinum, palladium, an alloy comprising platinum, an alloy comprising palladium, or a mixture thereof.

4. A catalyst coated membrane according to any preceding claim, wherein the recombination catalyst is supported on graphene-based platelets.

5. A catalyst coated membrane according to any preceding claim, wherein the proton exchange membrane comprises more than one ion-conducting layer.

6. A catalyst coated membrane according to 5, wherein the proton exchange membrane comprises no more than six ion-conducting layers.

7. A catalyst coated membrane according to claim 5 or 6, wherein at least one ion-conducting layer does not comprise supported recombination catalyst.

8. A catalyst coated membrane according to any preceding claim, wherein the recombination catalyst is present in an amount in the range of and including 10 to 90 wt% of the total weight of the recombination catalyst and the graphene.

9. A catalyst coated membrane according to any preceding claim, wherein the proton exchange membrane comprises a reinforcement material.

10. A catalyst coated membrane according to claim 9, wherein the electrocatalyst is selected from:
(i) the platinum group metals (platinum, palladium, rhodium, ruthenium, iridium and osmium);
(ii) gold;
(iii) a base metal;
or an alloy or mixture comprising one or more of these metals or their oxides.

11. A membrane electrode assembly comprising the catalyst coated membrane according to any previous claim.

12. A fuel cell comprising the catalyst coated membrane according to any of claims 1 to 10, or the membrane electrode assembly according to claim 11.

13. A proton exchange membrane electrolyser comprising the catalyst coated membrane according to any of claims 1 to 10, or the membrane electrode assembly according to claim 11.

## Patentansprüche

1. Katalysatorbeschichtete Membran, umfassend eine Protonenaustauschmembran und eine Elektrokatalysatorschicht, die auf mindestens einer Fläche der Protonenaustauschmembran aufgebracht ist, wobei die Protonenaustauschmembran eine ionenleitende Schicht umfasst, die ein ionenleitendes Polymer und einen geträgerten Rekombinationskatalysator umfasst, wobei der Rekombinationskatalysator auf Graphen geträgert ist und der geträgerte Rekombinationskatalysator eine D₅₀-Teilchengröße in dem Bereich von und einschließlich 0,1 bis 20 µm, gemessen durch dynamische Lichtstreuung, aufweist.

2. Katalysatorbeschichtete Membran nach Anspruch 1, wobei der geträgerte Rekombinationskatalysator in dem ionenleitenden Polymer dispergiert ist.

3. Katalysatorbeschichtete Membran nach Anspruch 1 oder 2, wobei der Rekombinationskatalysator Platin, Palladium, eine Legierung umfassend Platin, eine Legierung umfassend Palladium oder eine Mischung davon ist.

4. Katalysatorbeschichtete Membran nach einem der vorstehenden Ansprüche, wobei der Rekombinationskatalysator auf graphenbasierten Plättchen geträgert ist.

5. Katalysatorbeschichtete Membran nach einem der vorstehenden Ansprüche, wobei die Protonenaustauschmembran mehr als eine ionenleitende Schicht umfasst.

6. Katalysatorbeschichtete Membran nach 5, wobei die Protonenaustauschmembran nicht mehr als sechs ionenleitende Schichten umfasst.

7. Katalysatorbeschichtete Membran nach Anspruch 5 oder 6, wobei mindestens eine ionenleitende Schicht keinen geträgerten Rekombinationskatalysator umfasst.

8. Katalysatorbeschichtete Membran nach einem der vorstehenden Ansprüche, wobei der Rekombinationskatalysator in einer Menge in dem Bereich von und einschließlich 10 bis 90 Gew.-% des Gesamtgewichts des Rekombinationskatalysators und des Graphens vorhanden ist.

9. Katalysatorbeschichtete Membran nach einem der vorstehenden Ansprüche, wobei die Protonenaustauschmembran ein Verstärkungsmaterial umfasst.

10. Katalysatorbeschichtete Membran nach Anspruch 9, wobei der Elektrokatalysator ausgewählt ist aus:
(i) den Platingruppenmetallen (Platin, Palladium, Rhodium, Ruthenium, Iridium und Osmium);
(ii) Gold;
(iii) einem unedlen Metall;
oder einer Legierung oder Mischung, umfassend eines oder mehrere dieser Metalle oder ihrer Oxide.

11. Membran-Elektroden-Anordnung, umfassend die katalysatorbeschichtete Membran nach einem der vorstehenden Ansprüche.

12. Brennstoffzelle, umfassend die katalysatorbeschichtete Membran nach einem der Ansprüche 1 bis 10 oder die Membran-Elektroden-Anordnung nach Anspruch 11.

13. Protonenaustauschmembran-Elektrolyseur, umfassend die katalysatorbeschichtete Membran nach einem der Ansprüche 1 bis 10 oder die Membran-Elektroden-Anordnung nach Anspruch 11.

## Revendications

1. Membrane revêtue d'un catalyseur comprenant une membrane d'échange de protons et une couche d'électrocatalyseur appliquée sur au moins une face de la membrane d'échange de protons, dans laquelle la membrane d'échange de protons comprend une couche conductrice d'ions qui comprend un polymère conducteur d'ions et un catalyseur de recombinaison supporté, dans laquelle le catalyseur de recombinaison est supporté sur du graphène, et le catalyseur de recombinaison supporté a une taille de particule D₅₀ comprise entre 0,1 et 20 µm, telle que mesurée par diffusion dynamique de la lumière.

2. Membrane revêtue d'un catalyseur selon la revendication 1, dans laquelle le catalyseur de recombinaison supporté est dispersé dans le polymère conducteur d'ions.

3. Membrane revêtue d'un catalyseur selon la revendication 1 ou 2, dans laquelle le catalyseur de recombinaison est du platine, du palladium, un alliage comprenant du platine, un alliage comprenant du palladium, ou un mélange de ceux-ci.

4. Membrane revêtue d'un catalyseur selon l'une quelconque revendication précédente, dans laquelle le catalyseur de recombinaison est supporté par des plaquettes à base de graphène.

5. Membrane revêtue d'un catalyseur selon l'une quelconque revendication précédente, dans laquelle la membrane échangeuse de protons comprend plus d'une couche conductrice d'ions.

6. Membrane revêtue d'un catalyseur selon la revendication 5, dans laquelle la membrane échangeuse de protons ne comprend pas plus de six couches conductrices d'ions.

7. Membrane revêtue d'un catalyseur selon la revendication 5 ou 6, dans laquelle au moins une couche conductrice d'ions ne comprend pas de catalyseur de recombinaison supporté.

8. Membrane revêtue d'un catalyseur selon l'une quelconque revendication précédente, dans laquelle le catalyseur de recombinaison est présent dans une quantité comprise entre 10 et 90 % en poids du poids total du catalyseur de recombinaison et du graphène.

9. Membrane revêtue d'un catalyseur selon l'une quelconque revendication précédente, dans laquelle la membrane échangeuse de protons comprend un matériau de renforcement.

10. Membrane revêtue d'un catalyseur selon la revendication 9, dans laquelle l'électrocatalyseur est choisi parmi :
(i) les métaux du groupe du platine (platine, palladium, rhodium, ruthénium, iridium et osmium) ;
(ii) l'or ;
(iii) un métal commun ;
ou un alliage ou un mélange comprenant un ou plusieurs de ces métaux ou leurs oxydes.

11. Assemblage membrane-électrode comprenant la membrane enduite de catalyseur selon l'une quelconque revendication précédente.

12. Pile à combustible comprenant la membrane revêtue d'un catalyseur selon l'une des revendications 1 à 10, ou l'ensemble membrane-électrode selon la revendication 11.

13. Électrolyseur à membrane d'échange de protons comprenant la membrane revêtue de catalyseur selon l'une quelconque des revendications 1 à 10, ou l'ensemble membrane-électrode selon la revendication 11.
